# EUROPEAN PATENT APPLICATION

(11) **EP 4 492 318 A1**
(43) Date of publication of application: **15.01.2025**
(21) Application number: 24186353.9
(22) Date of filing: 03.07.2024
(51) Int. Cl.: G06Q 30/04, G06Q 40/03, G06Q 40/12, G06Q 20/10

(54) **A METHOD FOR REQUESTING AN INVOICE ADVANCE OR AN ASSIGNMENT OF RECEIVABLES**

(30) Priority: 10.07.2023 IT 202300014382
(71) Applicant: Smiling S.r.l., 20149 Milano (IT)
(72) Inventor: D'Amore, Giorgio Modestino Luigi Maria, 20149 Milano (IT); Garzulino, Massimo, 20149 Milano (IT); Trapella, Sandro, 20149 Milano (IT)
(74) Representative: Perani & Partners S.p.A.

(57) **Abstract**

A method for requesting an advance invoice and/or assignment of the receivable to a lender comprises issuing an invoice related to a receivable to be collected that is registered in an electronic invoicing system. An invoice verification software tool is provided, which is given access rights to the area of the electronic invoicing system reserved for the creditor. A request for verification of the uploaded invoice is then entered into the verification software tool. The verification tool analyses the existence and data of the invoice in the electronic invoicing system, and certifies the outcome of the verification. The certificate obtained is attached to a request for an invoice advance and/or assignment of the receivable submitted by the creditor to the lender.

## Description

### Technical Field

The present invention is developed in the field of electronic invoicing and loans for invoice advances and/or assignment of receivables.

### Prior art

In banking, it is common to provide loans to companies in the manner known as invoice advance and/or assignment of receivables. Both of these cases apply when an invoice, usually for a supply, is issued by a creditor to a debtor.

The creditor may then ask a lender, usually a bank, to provide it with the invoice amount, or a portion thereof (usually the full amount without VAT, or 80% of the amount with VAT), in order to have the liquidity available for the supply performed, before the debtor proceeds with the balance. The creditor may then reimburse the lender upon payment by the debtor.

The lender releases the requested amount after conducting the checks it deems necessary to protect against the risk of default.

In the case of assignment of the receivable, the disbursement takes place in a very similar manner but, at the contractual level, the receivable is assigned: the lender, i.e. the bank and/or factoring company, becomes the new creditor, in place of the original creditor, i.e. the invoice issuer requesting the assignment of the receivable. In this case, the lender is called a "factor", and the activity is normally referred to as "factoring".

In both contractual cases (loan for invoice advance and/or assignment of the receivable related to the invoice), the circumstances that are most relevant for the bank to verify are the creditworthiness of the creditor, and the actual existence of the claim against the debtor.

Usually, the practice of invoice advance is regulated between the bank and the creditor by means of a contract, stipulated in advance and containing maximum amounts of loans that can be disbursed, overall and for each individual debtor to whom the creditor issues invoices. The contract also usually establishes the information that the creditor must periodically provide to the bank for the assessment of its creditworthiness.

The contract for the assignment of the receivable differs from the loan for invoice advance in that the lending party becomes a creditor in place of the person issuing the invoice (and therefore entitled to the receivable). Even in the event of an assignment of the receivable, there are loan ceilings that can be disbursed per individual customer and/or conditions between the parties.

### Problems of the background art

While the lender can easily verify the reliability of the creditor's creditworthiness information, the existence of the claim to be advanced is difficult to verify, and in this respect the lender is required to rely on the good faith of the creditor. The lender may not know whether the alleged creditor is entitled to issue an invoice, and whether the alleged debtor acknowledges its debt.

Fraud against lenders is not uncommon, in which an alleged creditor, in order to obtain a loan, claims receivables against a debtor, when in fact there is no invoice for a supply service. In other cases, the invoice is actually issued, but to a person who has not received any supply service, and who is therefore not in debt and will not settle the invoice. In still other scams, the creditor does indeed have an invoice stating a real claim, but on the basis of this invoice he or she applies for a loan simultaneously from several lenders, receiving a multiplied total amount, which is only partially covered by the existing claim.

### Summary of the invention

In this context, the Applicant addressed the problem of uncertainty about the existence of the receivable to be advanced.

The Applicant has proposed to solve this problem based on electronic invoicing. Electronic invoicing is a known system that is mandatory in some countries, for invoices issued to the public administration and/or to private companies, and provides for invoices to be uploaded to special computerised registers. In Italy, the register is held by the Italian Revenue Agency. In particular, invoices are uploaded to an exchange system that complies with a legislative norm and/or standard, valid in at least one country.

Although electronic invoices are available to an independent state body, they can only be accessed by the parties involved in the invoice, i.e. the debtor and the creditor. Each party has its own reserved area with the state entity in question, or with a provider that provides electronic invoicing management services.

Accordingly, a bank that receives a request for invoice advance and/or a factor that receives a similar request for assignment of the receivable does not have certain information on electronic invoices relating to the creditor.

The Applicant has therefore devised a method for requesting an invoice advance and/or assignment of the receivable based on an invoice verification software tool. The latter receives access rights to the creditor's reserved area on the electronic invoicing system, in order to verify and certify, at the request of the creditor, the existence, and preferably the essential data, of the invoice for which the advance or assignment of the receivable is to be requested. In one embodiment, the verification software tool is integrated into the invoice management software made available by the provider.

The certification of the invoice takes place, for example, by uploading a file to a blockchain that certifies the existence of the invoice, after the verification has been carried out.

Advantageously, the lender does not have to rely on the creditor's good faith alone, but can ask him or her to document the existence and details of the invoice using the verification software tool. Since the verification software tool acts automatically, producing a certified file unalterable by the creditor, the lender is provided with a technical guarantee of the existence of the invoice. This is achieved by overcoming the technical obstacle of the invoice's inaccessibility to the lender, through the technical means of the verification software to which the necessary access rights are given and which obtains a certified file attesting to the invoice's existence.

The certification preferably also covers the indication on the invoice of a reference bank and/or the payment details of the factor, avoiding the risk of several loans being granted by different lenders for the same invoice.

Further features and advantages of the invention will be recognisable to a branch technician from the following detailed specification of exemplary embodiments of the invention.

### DETAILED DESCRIPTION

The invention relates to a method for requesting a loan, such as an invoice advance and/or an assignment of the receivable, from a lender. These two transactions fall into the category of short-term loans, specifically recourse loans or non-recourse loans.

The lender is usually a bank. However, private lenders are not excluded. In the case of assignment of the receivable, the lender also takes the name of factor.

As is well known, a request for an invoice advance is a request for a loan in connection with an invoice. Similarly, the same invoice can be used to obtain liquidity against the assignment of the receivable relating to the same invoice.

Regardless of the contractual formula foreseen by the lender, the invoice is always a tax document proving a supply of goods or services by a creditor and the right of the creditor to collect the price from a debtor. The price of the supply is therefore a debt to be paid, or a receivable to be collected, for a certain predetermined amount, by the debtor in favour of the creditor.

In the case of invoice advance, the loan is requested by the creditor in the form of an advance payment of the amount of the debt or a predetermined portion thereof. In the preferred embodiment, the payment advance concerns the amount of the debt, without VAT, or a predetermined percentage of the amount of the debt including VAT, for example 80%. In the case of assignment of the receivable, the loan is in the form of a transfer, from the creditor to the lender, of the receivable to be collected from the debtor.

However, the invention is not to be regarded as limited to specific portions of the amount for which prepayment is requested or issued and/or the contractual form envisaged (invoice advance and/or assignment of the receivable), which may vary according to different parameters between countries and/or even different tax conditions in the same country, or according to different arrangements between the lender and the creditor, which may be contractually amended in the future.

The invoice as known is issued by the creditor to the debtor, and is recorded in an electronic invoicing system.

The electronic invoicing system includes an electronic interchange system for invoices. The interchange system (SDI) is a computer system configured for the uploading of invoices by issuers, or creditors, and to make invoices available to recipients, or debtors.

The exchange system may be a national or supranational centralised system. In particular, the interchange system is preferably a system that complies with a pre-established legislative and/or standard rule, valid in at least one country, that specifically governs the use of electronic invoicing in that country.

The pre-established norm and/or standard generally governs technical (IT) and/or legal requirements for the interchange system. Known examples of similar standards and/or norms are listed in EU Directive 2014/55/EU (which is itself a standard complying with the description).

Preferably, the exchange system is managed by a public authority, such as a tax agency (in Italy, the Internal Revenue Agency). In some countries, the interchange system may not be operated by a public authority, but by another type of authorised entity, if this complies with that country's e-invoicing legislation.

The electronic invoicing system, in particular the interchange system, comprises an electronic invoice register, which can therefore itself be held by a state body. This register contains a total list of invoices relating to different tax subjects. This total list is not public.

In addition, the electronic invoicing system, in particular the interchange system, includes a central platform with multiple reserved areas, in the name of the different tax subjects to whom the invoices refer, as debtors or creditors. Each tax subject has exclusive access rights to its reserved area, which may be delegated to authorised professionals such as accountants or auditors. A restricted list of invoices is available within a reserved area, identified by a portion of the total list in which the invoices, relating to the tax subject to whom the reserved area is registered, are registered. The restricted list can be subdivided between invoices issued by the tax subject in whose name the restricted area is registered, and invoices issued to him or her.

Again in a known way, the electronic invoicing system may comprise an invoice management software service, e.g. a management IT platform, held by a provider. In some embodiments, the invoice management service is part of the interchange system, and therefore may be held by a state body. In other, more preferred embodiments, the provider is different from the state body holding the register. Providers usually have to comply with strict regulatory requirements on cybersecurity.

In particular, the provider is preferably a qualified Trust Service Provider (TSP), in particular a Trust Service Provider qualified according to a pre-established legislative norm and/or standard, valid in at least one country, relating at least to the authentication of users on websites. It is preferred that the legislative standard in question is the EU regulation known as elDAS (910/2014).

The invoice management software service can make available additional services, compared to those of the central platform, not necessarily connected to electronic invoicing. Multiple providers can offer different invoice management software services for the same electronic invoicing system.

Similar to the central platform, the management software service has a number of restricted areas, with access rights limited to respective individual tax subjects, where each tax subject can consult the restricted list of their invoices.

Of particular interest to the invention is the reserved area of the creditor designated in the invoice for which the advance has been requested. For certain aspects of the invention, this reserved area may be understood as either the reserved area at the state body holding the register, or the reserved area on the central platform of the interchange system, or the reserved area at one of the TSP providers, on the relevant proprietary management platform.

According to an aspect of the invention, an invoice verification software tool is provided. Preferably the invoice verification software tool is provided by a third party to the parties requesting the loan, i.e. a party other than the creditor and the lender.

In one embodiment, the verification tool is made by the provider, and is incorporated into the management service. In another embodiment, the verification tool is made by the provider, but is separate from the management service. In a further embodiment, the verification tool is provided to the provider by a verifier, separate from any provider, and is incorporated into the management service. The verifier does not necessarily need to comply with the same requirements as a provider, for example specific sectoral legislation and/or standards. In yet another embodiment, the verification tool is created and provided to the creditor by a verifier, and the verification tool is separate from any invoice management service.

The method of the invention involves providing the verification software tool with access rights to the creditor's reserved area, preferably by the creditor itself or its delegate, on the central platform of the state body, i.e. on the interchange system, or on the management platform of the provider. In this way, the verification tool can access the invoices in the restricted list of the reserved area.

In cases where the verification tool is integrated into the invoice management system, with access to the reserved area of the management system, the creditor automatically provides the verification tool with access to the restricted list of invoices.

Alternatively, the creditor may provide the verification tool with access rights to its reserved area, at the provider or state body, either by executing the verification tool while its reserved area is open, or by means of special access commands separate from any management system.

With the execution of the verification tool, it is foreseen to provide as input to the verification tool, preferably always by the creditor or its delegate, a verification request relating to one or more invoices for which the advance is to be requested.

Following the verification request, the verification tool automatically verifies the existence of the invoice, e.g. by searching it in the restricted list of the reserved area on the basis of an invoice identifier, and preferably also verifies one or more invoice data related to the invoice.

Invoice data can be all the data included in the invoice, or one or more of the data that is normally included in invoices, among which the following are preferred:
- the amount of the receivable to be settled,
- the indication of the debtor and the creditor,
- the expected timing of payment,
- the indication of a bank to address the payment,
- the indication of a value date, and
- an invoice identification code.

After verification, the verification tool is configured to obtain a certified file attesting to the existence of the invoice, and preferably the verified invoice data. The certified file can be obtained by certifying a file to be certified from a copy of the invoice itself, or from a different file in which the verified invoice data are included.

In the preferred embodiment, the certified file is obtained by uploading the file to be certified onto a blockchain, so that it can no longer be modified by the creditor. Each certified file therefore represents an NFT on that blockchain. Any existing blockchain can be used for this purpose, or a blockchain managed specifically for this purpose by the verifier. Any modification of the certified file would in fact be easily recognisable by any entity operating on the blockchain.

A specialist in the field may, however, provide alternative certification of the file to be certified.

Once the certified file is obtained, it can be associated by the creditor with the loan request, making it available to the lender.

The lender can then process the loan request, reviewing the certified file and any other documents it deems appropriate, e.g. relating to the lender's creditworthiness. In the event of a positive outcome, the lender may disburse the requested loan.

Obviously, a person skilled in the art will be able to make numerous modifications to the variants set forth above, without thereby abandoning the scope of protection defined by the appended claims.

## Claims

1. Method for requesting a loan from a lender, comprising:
- issuing, by a creditor, an invoice related to a receivable to be collected from a debtor, the invoice being recorded in a list of invoices in a reserved area of an electronic invoicing system, wherein access rights to the reserved area are restricted to the creditor,
- sending to a lender, by the creditor, a loan request, in the form of an invoice advance given by the payment by the lender of at least one portion of an amount of said receivable to be collected, and/or in the form of an assignment of the receivable to be collected from the creditor to the lender,
**characterized in that** it comprises:
- providing an invoice verification software tool,
- providing the verification software tool access rights to said reserved area,
- providing in input to the verification software tool a verification request for said invoice,
- verifying, by the verification software tool, the existence of said invoice in said list of invoices,
- obtaining by the verification software tool a certified file certifying the existence of said invoice, and
- associating the certified file with said loan request.

2. Method according to claim 1, wherein obtaining the certified file comprises uploading to a blockchain said invoice or a file containing invoice data related to the invoice.

3. Method according to claim 1 or 2, comprising verifying, by the verification software tool, in addition to the existence of the invoice, also invoice data related to the invoice, wherein the certified file comprises said invoice data, wherein preferably the invoice data includes one or more of the following, preferably all of the following:
- the amount of the receivable to be collected,
- an indication of the debtor and the creditor,
- an indication of a payment bank, and
- an indication of payment times.

4. Method according to any one of claims 1 to 3, wherein the invoice verification software tool is provided by a third party, other than the creditor and the lender.

5. Method according to any one of claims 1 to 4, wherein:
- the electronic invoicing system comprises a register of electronic invoices maintained by a state body, and
- said reserved area is a reserved area at said state body.

6. Method according to any one of claims 1 to 4, wherein:
- the electronic invoicing system comprises a register of electronic invoices maintained by a state body, and an invoice management software service maintained by a provider, and
- said reserved area is a reserved area at said provider.

7. Method according to claim 6, wherein the verification software tool is integrated in the invoice management software.

8. Method according to any one of claims 1 to 7, wherein the step of providing access rights to the verification software tool is carried out by the creditor.

9. Method according to any one of claims 1 to 8, wherein the step of providing the verification request in input to the verification software tool is carried out by the creditor.
